Europäisches Patentamt

European Patent Office

Office européen des brevets

(11) Publication number: **0 373 811**
**A2**

## (12) EUROPEAN PATENT APPLICATION

(21) Application number: **89312648.2**

(22) Date of filing: **05.12.89**

(51) Int. Cl.5: **G02B 5/08, G02B 5/04**

(30) Priority: **13.12.88 GB 8829034**

(43) Date of publication of application:
**20.06.90 Bulletin 90/25**

(84) Designated Contracting States:
**AT BE CH DE ES FR GB GR IT LI LU NL SE**

(71) Applicant: **THORN EMI Electronics Limited**
**Blyth Road**
**Hayes Middlesex UB3 1DL(GB)**

(72) Inventor: **Cross, Stephanie**
**23, Green Farms Road**
**Bagshor Surrey GU19 5LB(GB)**
Inventor: **Leaver, Frank Geoffrey**
**77, Foxwood Close**
**Feltham Middlesex TW13 7DW(GB)**
Inventor: **Marsden, David**
**16, Newton Court**
**Old Windsor Berkshire SL4 2RB(GB)**

(74) Representative: **Fleming, Ian Alexander et al**
**THORN EMI Patents Limited The Quadrangle**
**Westmount Centre Uxbridge Road**
**Hayes Middlesex, UB4 0HB(GB)**

(54) **Reflector.**

(57) A rotating reflector 9 includes a number of reflective facets, each reflective facet being associated with a refractive wedge shaped prism 21, 23. The prisms are arranged so as to increase the angle through which incident radiation is deflected by the reflector. The angles $\gamma$ which the reflective facets make with the axis of rotation of the reflector may thus be reduced, reducing optical distortion in the image produced by the reflector.

**EP 0 373 811 A2**

FIG.4

# REFLECTOR

This invention is concerned with reflectors and the compensation for geometric distortion that can occur when a reflective facet, or some other form of substantially planar reflector, is scanned relative to a scene from which radiation is to be received for imaging purposes and/or to a region at which an image to be viewed is reconstructed. It relates especially, though not exclusively, to such compensation in a thermal imager scanner of the kind in which a multi faceted reflector is rotated about a fixed axis and is arranged to successively reflect radiation received from various points in a field of view on to a fixed detector sensitive to the radiation so received. The reflector may also be used, in the event that the scanner is of the "direct view" kind, to direct light from an array of light emitting diodes (LED's) through suitable optical components to a viewing position.

In order that a thermal imager scanner may be used to build up a two dimensional picture of the field of view, it is well known that the facets of a multi-faceted reflector are caused to sweep across the field of view, therefore creating an effective line scan, whilst an additional reflective component is caused to execute a repetitive motion, synchronised to the line scan motion, to effect field scanning in the orthogonal direction to the line scan. Alternatively, the field scan can be achieved by constructing the multi-faceted reflector so that the angle of the facets vary from facet to facet. In either event a two dimensional picture is built up out of a banded series of parallel scans built up as respective facets of the reflector sweep relative to the fixed detector. In an ideal situation, the various bands would be identical and rectilinear and the series of bands so scanned could be pieced together to make a single undistorted two dimensional representation of the field of view. In practice, however, the varying compound angle of the facet with respect to the detector position results in distortion of particularly the edges of the aforementioned bands. This invention aims at reducing such distortion and permitting a more accurate two dimensional representation of the field of view to be created.

According to the invention there is provided a reflector including at least one reflective facet arranged to move relative to radiation incident thereon to cause relative scanning movement between the incident radiation and a position at which the incident radiation is to be directed, said facet having directly associated therewith a refractive member configured and dimensioned to reduce distortion of the patterns of radiation incident on and reflected from said facet.

In order that the invention may be clearly understood and readily carried into effect, one reflector in accordance with the invention will now be described by way of example only with reference to the accompanying drawings of which:-

Figure 1 shows in schematic perspective view certain elements of a thermal imager scanner incorporating a prior art reflector;

Figure 2 is a section along the line II-II of Figure 1;

Figure 3 illustrates an image produced by the scanner of Figure 1;

Figure 4 corresponds to the section of Figure 2 for a reflector in accordance with the invention; and

Figure 5 is the image corresponding to that of Figure 3, but produced by the reflector shown in Figure 4.

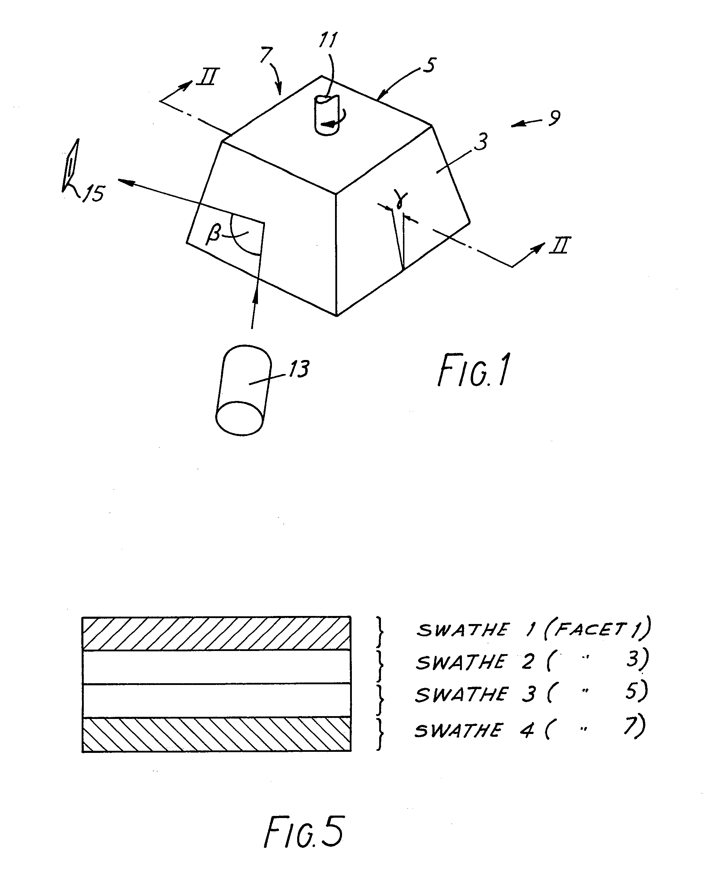

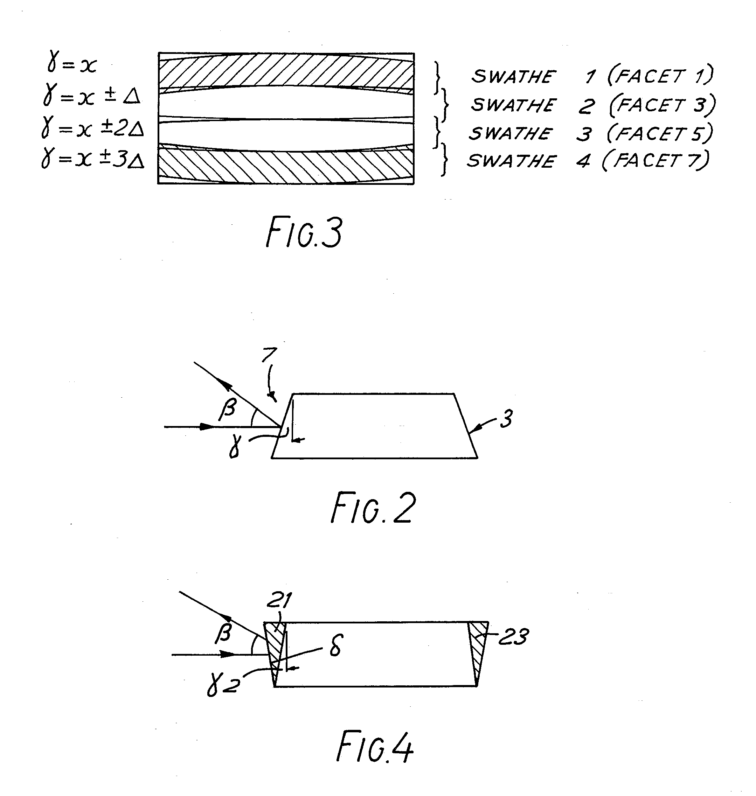

Referring firstly to the prior art arrangement illustrated in Figures 1 and 2, a rotating reflector having a plurality of facets 1, 3, 5, 7, four in this example, is shown schematically at 9. The reflector is rotatable about an axis indicated at 11 and is arranged and configured to reflect infra-red energy incident thereon through optical components suitable for infra-red imaging, such as an infra-red telescope 13, which is focused on a desired field of view, towards a fixed infra-red sensitive detector 15. The detector 15 can be of any known form and is arranged to generate electrical signals indicative of the amounts of radiation received thereby from time to time after reflection from the rotating reflector, and the electrical signals generated by the detector are processed by electrical circuits in known manner. If the reflector is to be utilised in a direct view imager, the aforementioned electrical signals, or signals derived therefrom, may be used to modulate the diodes of an array of LED's and the light generated thereby can conveniently be reflected from the facets of the reflector 9 towards a viewing location. Again, suitable optical components would be used to image the light at the desired location.

Each facet of the rotating reflector 9 is disposed at a different respective angle $\gamma$ to the axis 11 of rotation of the reflector 9. These different angles $\gamma$ cause each facet to reflect on to the detector 15 radiation incident from a respective horizontal swathe of the field of view viewed by the telescope 13 as shown in Figure 3.

Thus the four swathes correspond to the four facets 1, 3, 5, 7 set at angles x, x± $\Delta$, x ±2 $\Delta$ and x±3 $\Delta$ respectively to the axis of rotation 11.

These swathes are distorted due to the varying compound angle of the facets with respect to the image plane.

Referring now to Figure 4, this problem of distortion is overcome by a reflector in accordance with the invention by the provision of respective refractive, wedge shaped prisms directly associated with each of the facets of the rotating reflector only two such prism 21, 23 being shown in the figure. These prisms 21, 23 are suitably formed with a metallic reflective back faces and mounted onto a multi-faceted carrier in order to create a scanner in accordance with the invention. Alternatively the carrier may have reflective faces, the prisms being attached to the carrier by a matched adhesive. The prisms 21, 23 allow significant reductions in inclination angle of the facets 1, 3, 5, 7 as will be explained hereafter and thereby effectively eliminate the distortion shown in Figure 3 as can be seen by comparing Figures 3 and 5. As the optical distortion is reduced by a reflector in accordance with the invention a representation of the scene viewed by the telescope 13 is built up in series as shown in Figure 5 with each facet effectively contributing a respective horizontal swath at a respective vertical location in the field of view to the overall representation. In the case of a direct-view imager, similar comments apply, mutatis mutandis, to the light from the LED's.

Considering again the prior art arrangement of Figures 1 and 2, it can be seen that the deviation angle $\beta$ for radiation incident on the prior art reflector is given by twice the facet angle which is shown as $\gamma$. For a reflector in accordance with the invention however incorporating the refractive wedge members 21, 23 the deviation angle is a function of the refractive index of the wedge shaped prism, the new facet angle $\gamma$ 2 and the wedge angle $\delta$. In these circumstances it can be seen that $\gamma$ 2, the facet angle for the facets with wedge shaped prisms attached thereto, is significantly less than $\gamma$, the angle for the prior art reflector facet. In one practical example angles of the order of 6 - 10 degrees for an untreated reflector can be reduced to 1 - 1 1/2 degrees for a reflector assembly used in a scanner according to the present invention.

It will be appreciated that not all facets of a rotating reflector need to have a refractive member associated therewith. For example, any facets which have very small angles, typically those used for the central area of the field of view in a vertical sense, may well not need the correction which the refractive members provide, and moreover those facets which relate to the top and bottom of the field of view may not require the provision of a refractive member because the distortion can be tolerated in peripheral areas of the representation.

In an alternative arrangement to the use of the same reflector 9 for the imaging of both infra-red and visible radiation, it may be preferable in some instances to provide respective reflectors for the two kinds of radiation, these reflectors being conveniently mounted one above the other on the same axis of rotation.

It will be appreciated that whilst the reflectors described hereabove have four facets, this is merely for the sake of clarity, and in practice a reflector in accordance with the invention may have any number of facets, typically between six and ten.

The invention can also be of value however for a reflector having a single facet used in an oscillatory or other repetitive sweeping mode for certain applications.

In all arrangements in accordance with the invention, the improvement in geometry is not achieved merely as a result of the aforementioned reduction in facet angles. Partial cancellation of distortion also arises as a result of opposing distortions occurring at each facet reflection and in the associated prism. It is to be noted, however, that for a given waveband of the radiation concerned and a given angle of scan, the facet angles, and the angles and refractive index of the associated prisms have to be carefully matched if the scan pattern is to be optimised.

Although the invention has been described in relation to circumstances in which infra-red, and possibly also visible, radiation is scanned, radiation in other wavelength bands, for example the ultra-violet, can also be dealt with by reflectors embodying the invention.

## Claims

1. A reflector including at least one reflective facet arranged to move relative to radiation incident thereon to cause relative scanning movement between the incident radiation and a position at which said incident radiation and a position at which the incident radiation is to be directed, said facet having directly associated therewith a refractive member configured and dimensioned to reduce distortion of the patterns of radiation incident on and reflected from said facet.

2. A reflector according to Claim 1 in which the reflector is at least partially rotatable about an axis, each reflective facet being disposed at an angle to the axis of rotation, each refractive member being effective to increase the angle through which the incident radiation is deflected by the reflector.

3. A reflector according to either of the preceding claims in which each refractive member comprises a wedge shaped prism.

4. A reflector according to Claim 3 in which each prism has a reflective back facet constituting the reflective facet.

5. A reflector according to anyone of the preceding claims in which the reflector includes at least one further reflective facet not associated with a respective refractive member.

6. A reflector according to anyone of the preceding claims for reflecting incident radiation within a plurality of different wavelength bands.

7. A reflector according to anyone of the preceding claims arranged to direct the incident radiation onto a detector means arranged to produce a representation of an image of an object represented by the incident radiation.

8. A reflector according to anyone of the preceding claims in which the incident radiation comprises infra-red radiation.

9. A reflector according to anyone of the preceding claims in which the incident radiation comprises visible radiation.

FIG.1

} SWATHE 1 (FACET 1)
} SWATHE 2 ( " 3)
} SWATHE 3 ( " 5)
} SWATHE 4 ( " 7)

FIG.5

$\gamma = x$

$\gamma = x \pm \Delta$

$\gamma = x \pm 2\Delta$

$\gamma = x \pm 3\Delta$

SWATHE   1 (FACET 1)

SWATHE   2 (FACET 3)

SWATHE   3 (FACET 5)

SWATHE   4 (FACET 7)

*FIG.3*

*FIG.2*

*FIG.4*